## Europäisches Patentamt
## European Patent Office
## Office européen des brevets

(19)

(11) Veröffentlichungsnummer: **0 162 144**
**B1**

(12)

# EUROPÄISCHE PATENTSCHRIFT

(45) Veröffentlichungstag der Patentschrift:
20.07.88

(51) Int. Cl.⁴: **H 01 G 4/18,** H 01 G 13/00

(21) Anmeldenummer: **84115615.1**

(22) Anmeldetag: **17.12.84**

(54) **Verfahren zu Herstellung eines elektrischen Kondensators mit Polyethylenterephthalat als Dielektrikum insbesondere zur Verwendung als lötfähiges Chip-Bauelement.**

(30) Priorität: **03.04.84 DE 3412463**

(43) Veröffentlichungstag der Anmeldung:
**27.11.85 Patentblatt 85/48**

(45) Bekanntmachung des Hinweises auf die Patenterteilung:
**20.07.88 Patentblatt 88/29**

(84) Benannte Vertragsstaaten:
**AT BE CH DE FR GB IT LI NL SE**

(56) Entgegenhaltungen:
**FR-A-1 177 220**
**GB-A-1 138 794**
**US-A-3 160 801**
**US-A-4 255 381**

**IEEE TRANSACTIONS ON ELECTRICAL INSULATION, Band EI-15, Nr. 4, August 1980, Seiten 335-339, New York, US; J.F. MOREL u.a.: "Thermal aging of bi-axially oriented PET films: Relation between structural changes and dielectric behavior"**

(73) Patentinhaber: **Siemens Aktiengesellschaft Berlin und München, Wittelsbacherplatz 2, D-8000 München 2 (DE)**

(72) Erfinder: **Hartmut, Michel, Dr. rer. nat., Am Hahnenschnabel 7, D-7920 Heidenheim (DE)**

**Beschreibung**

Die Erfindung betrifft ein Verfahren zur Herstellung eines elektrischen Kondensators für die Verwendung als lötfähiges Chip-Bauelement, bei dem aus wenigstens einseitig metallisiertem Dielektrikumslagen aus teilsweise kristalliertem Polyethylenterephthalat Kondensatorkörper in Form eines Rundwickels erzeugt werden, die danach in an sich bekannter Weise zu einem flachgepreßten Wickel verformt und dabei vorgeschrumpft werden, wonach an den Stirnflächen Metallauflagen zur Kontaktierung der alternierend auf den Dielektrikumslagen angeordneten Belegungen aufgetragen werden.

Die Erfindung betrifft ferner ein Verfahren zur Herstellung eines elektrischen Kondensators, insbesondere für die Verwendung als Chip-Bauelement, bei dem wenigstens einseitig metallisierte Bänder aus Polyethylenterephthalat, insbesondere mit randseitigem Wellenschnitt, auf einer Trommel zu einem Ausgangskondensator geschichtet und der Ausgangskondensator senkrecht zu den Schichtebenen in die gewünschten Einzelkondensatoren aufgeteilt wird, wobei gegebenenfalls auf eine Anzahl wenigstens einen Mutterkondensator bildenden Dielektrikumslagen und Belegungen kapazitiv nicht wirksame Zwischenlagen und darauf wieder die kapazitiv wirksamen Dielektrikumslagen mit den Belegungen für den nächsten Mutterkondensator angeordnet werden und der so entstandene Ausgangskondensator mit stirnkontaktschichten versehen, danach noch auf der Trommel bei ca. 150° C mit dabei erfolgender Verfestigung duch Vorschrumpfen getempert und erst dann im Bereich der Zwischenlagen und in dazu senkrechter Richtung in die gewünschten Einzelkondensatoren aufgeteilt wird.

Die Erfindung betrifft weiterhin einen elektrischen Kondensator, hergestellt nach einem dieser Verfahren, bestehend aus wenigstens einseitig mit Metallschichten als Belegungen versehenen Dielektrikumslagen aus teilsweise kristallisiertem und vorgeschrumpftem Polyethylenterephthalat, bei dem die Belegungen alternierend mit gegenpolig auf Stirnflächen des Kondensatorkörpers aufgebrachten, insbesondere aufgeschoopten Metallauflagen elektrisch leitend verbunden sind und bei dem die Dielektrikumslagen zu einem Stapel geschichtet oder zu einem flachgepreßten Wickel verformt sind.

Kondensatoren im Sinne der vorliegenden Erfindung sind sowohl flachgepreßte Wickelkondensatoren als auch Stapel- oder Schichtkondensatoren, wie sie an sich bekannt sind.

Während es für flachgepreßte Wickelkondensatoren und deren Herstellung eine Vielzahl von Literaturstellen gibt, so daß sich ein näherer Literaturnachweis erübrigt, sind Stapel- oder Schichtkondensatoren im Sinne der vorliegenden Erfindung und deren Herstellung beispielsweise in der DE-PS-1 764 541 (entsprechend den US-PSen 3 670 378 und 3 728 765) beschrieben. Diese Kondensatoren sind in sehr großen Stückzahlen (täglich bis oder über 1 Mill. Stück) bisher hergestellt worden und befinden sich auch dem Markt.

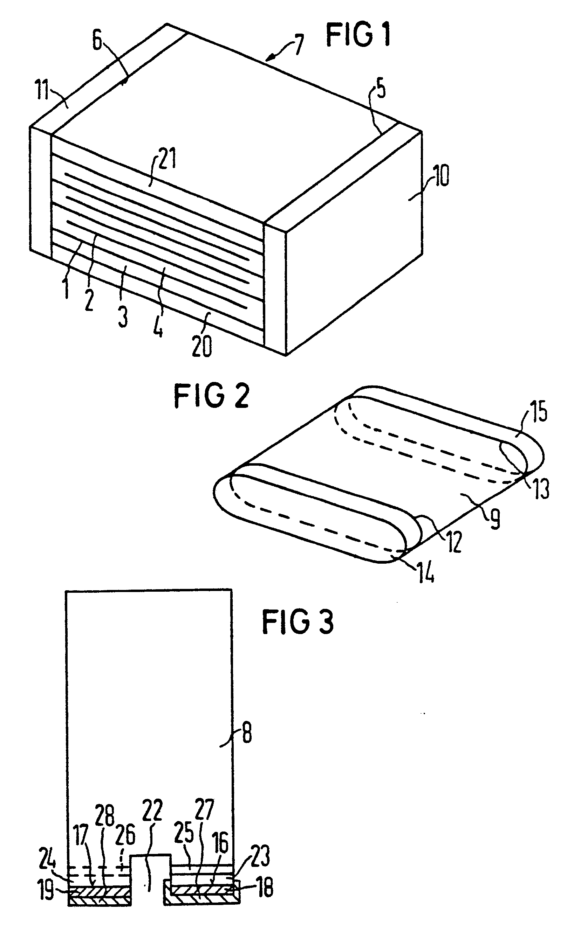

Eine andere Art von Stapel oder Schichtkondensatoren, auf die sich die vorliegende Erfindung ebenfalls bezieht, sind in der europäischen Patentschrift 0 144 857, Priorität vom 23. November 1983, beschrieben. Diese Kondensatoren sind im Gegensatz zu den anderen üblichen Stapel- bzw. Schichtkondensatoren bifilar ausgebildet und damit induktionsarm. Ein solcher Kondensator ist in der beiliegenden Fig. 3 dargestellt und wird zusammen mit der Figurenbeschreibung erläutert.

Die bekannten elektrischen Kondensatoren mit Polyethylenterephthalat als Dielektrikum haben sich wegen der besonders guten dielektrischen und elektrischen Eigenschaften dieses Dielektrikums in der Praxis im umfangreichen Maße bewährt.

Wenn solche Kondensatoren jedoch als Chip-Bauelement auf den Schaltplatten gedruckter Schaltungen befestigt werden sollen, so treten Schwierigkeiten auf, die darin bestehen, daß durch die Wärme des flüssigen Lotes, das Temperaturen von maximal 260° C aufweist und mit dem sie mittelbar oder unmittelbar für einen Zeitraum von 10 Sekunden in Berührung kommen, Veränderungen des Dielekrikums auftreten, wie z. B. erhebliche zusätzliche Schrumpfung, Verformung des Kondensatorkörpers, Abreißen der angebrachten Metallauflagen und Veränderung des dielektrischen Verhaltens (Verlustfaktor, Dielektrizitätskonstante), so daß man bisher davon absehen mußte, solche Kondensatoren als Chip-Bauelemente einzusetzen. Man war gezwungen, für solche Fälle auf Kondensatoren mit keramischem Dielektrikum zurückzugreifen, oder aber Kondensatoren mit Kunststoffdielektrikum in besonderer und konstruktiv aufwendiger Weise vor der Wärmeeinwirkung zu schützen.

Bei der Herstellung von Stapel- bzw. Schichtkondensatoren auf einer Trommel treten weitere Probleme auf, die darin bestehen, daß beim Aufwickeln mehrerer Mutterkondensatoren (Ringen) übereinander auf die Trommel der Wickeldruck von innen nach außen abnimmt und auch beim Tempern der Kondensatoren zum Zwecke der Verfestigung die weiter innen liegenden Mutterkondensatoren (Ringe) einem erhöhten, durch den Schrumpfvorgang hervorgerufenen Druck ausgesetzt werden. Die äußeren Mutterkondensatoren weisen infolge des geringeren Druckes im verfestigten Ausgangskondensator geringere Kapazitäten auf, die zum Teil erheblich geringer sind, als beispielsweise im innersten Mutterkondensator, wobei diese Abweichungen bis zu 20 % betragen können. Diese Schwierigkeiten treten hauptsächlich bei der Verwendung sehr dünner Dielektrikumslagen auf, beispielsweise mit einer Dicke von 3 μm und kleiner. Um die geringere Kapazität von Einzelkondensatoren aus außen liegenden Mutterkondensatoren auszugleichen, wird bisher die Länge solcher Kondensatoren beim Abtrennen vom Mutterkondensator größer gehalten.

Der vorliegenden Erfindung liegt die Aufgabe zugrunde, Verfahren zur Herstellung eines elektrischen Kondensators anzugeben, der weniger temperaturanfällig ist, insbesondere bei der Verwendung als Chip-Bauelement, dessen Einsatztemperaturbereich bis zu Temperaturen von 200° C reichen kann und bei dessen Herstellung als Stapel- bzw. Schichtkondensator die Unterschiede der Kapazitätswerte zwischen Innen- und Außenringen auf ein Minimum verringert oder möglichst ganz beseitigt werden können.

Das Verfahren zur Herstellung eines flachgepreßten Wickelkondensators der eingangs angegebenen Art ist zur Lösung der Aufgabe erfindungsgemäß dadurch gekennzeichnet, daß die mit den Metallauflagen versehenen Flachwickel einer zusätzlichen Wärmebehandlung unterworfen werden, bei der die Temperatur von Raumtemperatur auf eine Endtemperatur von 200 bis 250° C in einem Zeitraum von 1 bis 5 Stunden erhöht wird und diese Endtemperatur für eine Zeit von 1 bis 65 Stunden gehalten wird mit der Maßgabe, daß die Länge der Haltezeit der Endtemperatur umgekehrt proportional ist, so daß ein gewünschter Kristallisationsgrad von wenigstens 50 % erzielt wird.

Das Verfahren zur Herstellung eines Stapel- oder Schichtkondensators der eingangs angegebenen Art ist zur Lösung der Aufgabe erfindungsgemäß dadurch gekennzeichnet, daß die abgetrennten Einzelkondensatoren einer zusätzlichen Wärmebehandlung unterworfen werden, bei der die Temperatur von Raumtemperatur auf eine Endtemperatur von 200 bis 250° C in einem Zeitraum von 1 bis 5 Stunden erhöht wird und diese Endtemperatur für eine Zeit von 1 bis 65 Stunden gehalten wird mit der Maßgabe, daß die Länge der Haltezeit der Endtemperatur umgekehrt proportional ist, so daß ein gewünschter Kristallisationsgrad von wenigstens 50 % erzielt wird.

Vorzugsweise wird die Wärmebehandlung unter inertem Schutzgas (Stickstoff, Argon, Helium) oder im Vakuum durchgeführt.

Ferner ist es vorteilhaft, wenn die Haltezeit bei der Wärmebehandlung 2 Stunden und die Endtemperatur 249° C betragen und dadurch ein Krisallisationsgrad von mehr als 50 % erzielt wird.

Der elektrische Kondensator der eingangs angegebenen Art, hergestellt nach einem der angegebenen Verfahren, ist erfindungsgemäß dadurch gekennzeichnet, daß der Kristallisationsgrad der Dielektrikumslagen aus Polyethylenterephthalat wenigstens 50 %, insbesondere wenigstens 55 % beträgt, gemessen durch Differenzialthermoanalyse zur Bestimmung der Schmelzpunktsenthalpie.

Die Verwendung eines solchen Kondensators als Chip-Bauelement ist besonders vorteilhaft, weil es durch Lötung auf Schaltplatten gedruckter Schaltungen befestigbar ist, obwohl es dabei der Wärme des flüssigen Lotes, das eine Temperatur von maximal 260° C aufweist, für einen Zeitraum von etwa 10 Sekunden ausgesetzt wird.

Die Methode zur Bestimmung der Schmelzpunktsenthalpie durch Differenzialthermoanalyse ist hinreichend bekannt und allgemein gebräuchlich.

Durch die Erfindung wird die ihr zugrundeliegende Aufgabe in befriedigender Weise gelöst, wie nachfolgend erläutert wird.

Bei der Herstellung der an sich bekannten Kondensatoren wird Polyethylenterephthalat-Folie in Form von Bändern verwendet, die einen Ausgangskristallisationsgrad von etwa 40 % aufweisen. Durch die Vorschrumpfung bei der Formung des flachgepreßten Wickels oder bei der Verfestigung des aus mehreren Mutterkondensatoren bestehenden Ausgangkondensators auf der Trommel durch Temperatureinwirkung wird dieser Kristallisationsgrad nicht oder nur unwesentlich erhöht. Dieser Anteil an Kristalliten im Kunststoffdielektrikum erlaubt eine gute Verarbeitung desselben wegen seiner besonderen Biegsamkeit. Würde man den Kristallisationsgrad vor der Verarbeitung auf 50 % und mehr erhöhen, so ist die Verarbeitbarkeit schwierig oder nicht mehr gewährleistet.

Andererseits bewirkt ein zu niedriger Kristallisationsgrad im fertigen Kondensator, daß durch die Wärmebeeinflussung beim Lötvorgang bei der Verwendung als Chip-Bauelement ein plötzlicher Schrumpfvorgang eintritt, der zu den oben angeführten Nachteilen führt, insbesondere wenn das Lot Temperaturen bis 260° C aufweist und der Lötvorgang, wie an sich üblich, 10 Sekunden dauert.

Überraschender Weise wurde festgestellt, daß durch die zusätzliche Wärmebehandlung und die dabei erzielte Erhöhung des Kristallisationsgrades die Dielektrikumslagen im Kondensator ein Kristallgefüge erhalten, das einem plötzlichen Schrumpfvorgang widersteht. Es kommt dabei hinzu, daß die Wärmebehandlung praktisch bis nur 1 oder 2 Grad unterhalb der Schmelztemperatur des Polyethylenterephthalats vorgenommen wird. Durch die relativ langsame Aufwärmung auf diese Temperatur und das Halten bei dieser Temperatur resultiert ein Gefüge das plötzlicher Wärmeeinwirkung beim Lötvorgang widersteht.

Bei der Herstellung von Stapel- bzw. Schichtkondensatoren auf einer Trommel kommt als weiterer besonderer Vorteil hinzu, daß die von der Lage des Mutterkondensators im Ausgangskondensator abhängige Kapazitätstoleranz praktisch verschwindet. Der Vorteil wirkt sich dahingehend aus, daß sowohl von Mutterkondensatoren in der Nähe der Trommel, als auch von Mutterkondensatoren der äußeren Lagen Einzelkondensatoren praktisch gleicher Länge abgetrennt werden können, so daß bei praktisch gleichen Volumina nahezu gleiche oder meist sogar gleiche Kapazitäten resultieren. Dies war, wie oben dargelegt, bisher nicht der Fall, weil Kondensatoren aus äußeren Lagen stets etwas länger sein mußten als Kondensatoren von inneren Lagen.

Überraschenderweise hat sich als weiterer Vorteil gezeigt, daß der Verlustfaktor, der bei bekannten Kondensatoren ohne zusätzliche Wärmebehandlung bei 1 kHz im Bereich zwischen $4 \times 10^{-3}$ und $5 \times 10^{-3}$ lag, nunmehr auf etwa die Hälfte reduziert wird, d.h. der Verlustfaktor beträgt etwa $2 \times 10^{-3}$ bis $3 \times 10^{-3}$.

Zum Schutz vor chemischen Einflüssen durch Lötflußmittel und Reinigungsmittel, die bei der Bestückung geschichteter Schaltungen notwendig sind, können die Kondensatoren mit einer Umhüllung versehen sein, die die Lötflächen freiläßt. Besonders vorteilhaft ist die Verwendung der wärmebehandelten Kondensatorkörper der vorliegenden Erfindung als Chip-Bauelement, wenn sie mit Stromzuführungen und einer Umhüllung versehen sind, wie es in der prioritätsgleichen EP-A-0 162 149 beschrieben ist.

Die Erfindung wird nachfolgend anhand von Ausführungsbeispielen und der beigefügten Figuren erläutert.

Es zeigen:

Fig.1 einen Stapel- bzw. Schichtkondensator der üblichen Bauart,

Fig. 2 einen Kondensator mit einem flachgepreßten Wickel als Kondensatorkörper,

Fig. 3 einen Stapel- bzw. Schichtkondensator mit bifilarer Anordnung der Elektroden,

die Figuren 4, 5, und 6 beispielhaft die Anordnung der Belege auf den Dielektrikumslagen,

Fig. 7 ein Temperatur-Zeit-Diagramm für die zusätzliche Wärmebehandlung,

Fig.8 ein Diagramm, in dem die Abhängigkeit der Kapazität von der Lage des Mutterkondensators im Ausgangskondensator dargestellt ist,

Fig. 9 ein Diagramm, in dem die relative Änderung der Kapazität in Abhängigkeit von der Temperatur der Wärmebehandlung dargestellt ist und

Fig. 10 ein Diagramm, in dem die Abhängigkeit des Verlustfaktors von der Temperatur der Wärmebehandlung dargestellt ist.

In Fig. 1 ist der Kondensatorkörper 7 als Stapel- bzw. Schichtkondensator dargestellt. Der Kondensatorkörper 7 besteht aus übereinander angeordneten Dielektrikumslagen 3 und 4, die wenigstens einseitig mit als Belegungen 1 und 2 dienenden Metallschichten versehen sind.

Auf den Stirnflächen 5 und 6 des Kondensatorkörpers 7 sind Metallauflagen 10 und 11 aufgetragen, beispielsweise durch das an sich bekannte Schoop-Verfahren, die dazu dienen, die alternierend in die Stirnflächen 5 bzw. 6 reichenden Metallbelegungen 1 bzw. 2 elektrisch miteinander zu verbinden.

In Fig. 1 sind ferner noch Decklagen 20 und 21 gezeigt, die entweder durch die Zwischenlagen bei der Herstellung gebildet werden oder aber als zusätzliche Wickellagen auf die Mutterkondensatoren aufgetragen sind.

In Fig. 2 ist ein elektrischer Kondensator gezeigt, dessen Kondensatorkörper 9 als flachgepreßter Wickel dargestellt ist. Auch in diesem Kondensator sind die in Fig. 2 nicht gezeigten Metallbelegungen enthalten und reichen alternierend zu den Stirnflächen 12 und 13, auf die Metallauflagen 14 und 15 zur elektrischen Verbindung und zur äußeren Kontaktierung aufgetragen sind.

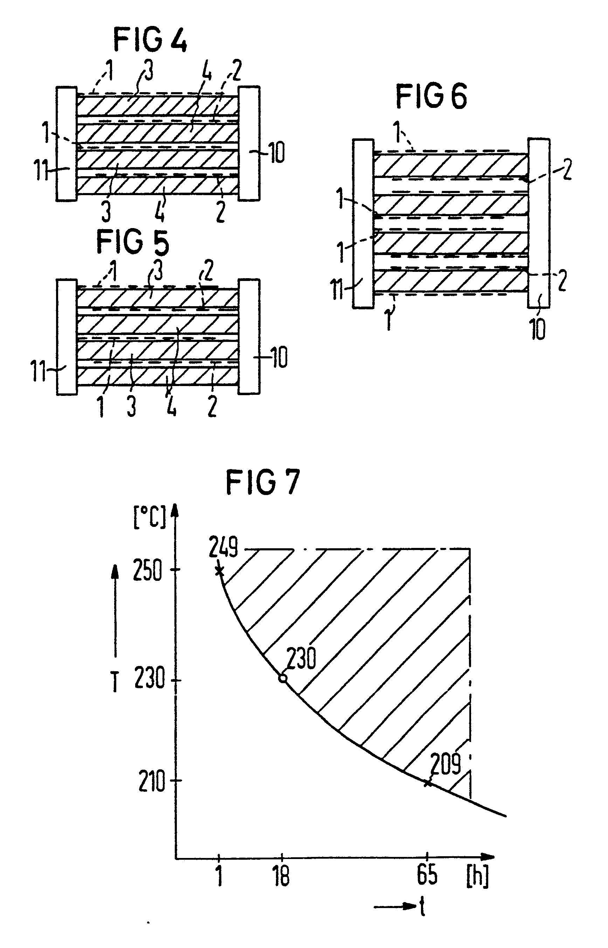

In Fig. 4 ist schematisch gezeigt, daß die Belegungen 1 bzw. 2 auf nur einer Seite einer jeden Dielektrikumslage 3 bzw. 4 aufgetragen sind.

In Fig. 5 ist gezeigt, daß die Dielektrikumslagen 3 auf beiden Seiten mit Metallschichten 1 bzw. 2 versehen sind, wobei die Metallbelegung 1 jeweils zur linken Stirnseite und die Metallbelegung 2 jeweils zur rechten Stirnseite verläuft und dort durch die Metallauflagen 10 bzw. 11 miteinander elektrisch verbunden sind. Die Dielektrikumslagen 4 weisen keine Metallschichten auf, sind aber dennoch dielektrisch wirksam, weil sie im Feldraum angeordnet sind.

In Fig. 6 sind ebenfalls beidseitig mit Metallbelegungen versehene Dielektrikumslagen gezeigt, wobei aber jeweils gleichpolige Belegungen 1 bzw. Belegungen 2 miteinander in Berührung stehen. Durch die Metallauflagen 10 bzw. 11 werden die gleichpoligen Belegungen 1 bzw. 2 der einzelnen Dielektrikumslagen miteinander elektrisch leitend verbunden.

Die in den Fig. 4 bis 6 dargestellten Arten des Verwickelns metallisierter Folien sind an sich bekannt. Separater Schutz für diese Ausführungen wird nicht beansprucht.

Der in Fig. 3 gezeigte Stapel- bzw. Schichtkondensator der in der deutschen Patentanmeldung P 33 42 329.6 ins einzelne gehend beschrieben ist, besteht aus einem verfestigten Stapel 8 von mit je einer Metallschicht als Belegung versehenen, aneinandergeschichteten Dielektrikumslagen und weist an einer Schmalseite einen Einschnitt 22 auf, durch den die einzelnen Dielektrikumslagen Vorsprünge 23 und 24 erhalten. Auf diesen Vorsprüngen sind abwechselnd von Lage zu Lage die Metallbelegungen durch Isolierstreifen 25 und 26 unterbrochen, so daß die Metallbelegungen, die sich auf den Dielektrikumslagen und auf den von den Vorsprüngen 23 und 24 gebildeten Flächen befinden alternierend von Lage zu Lage gegenpolige Belegungen darstellen, die durch Metallauflagen 18 bzw. 19 auf den Stirnflächen 16 bzw. 17 der Vorsprünge 23 bzw. 24 miteinander elektrisch verbunden sind.

Auf den Metallauflagen 18 bzw. 19 sind entweder lötfähige Metallschichten 27 aufgetragen, die die Vorsprünge 23 bzw. 24 etwas umgreifen, oder es sind lötfähige Metallschichten 28 aufgetragen, die nur mit den Metallauflagen 18 bzw. 19 verbunden sind. Die Metallschichten 27 bzw. 28 dienen zur elektrischen und mechanischen Verbindung des Kondensators 8 als Chip mit den Kontaktflächen der Schaltplatte, wobei der Kondensator auch liegend (Metallschichten 27) oder stehend (Metallschichten 28) eingebaut werden kann.

In der genannten Schrift ist das Herstellungsverfahren solcher Kondensatoren ins einzelne gehend erläutert. Die Anordnung der Belegungen ist bei diesen Kondensatoren bifilar, so daß solche Kondensatoren sehr induktionsarm sind.

Die in den Diagrammen wiedergegebenen Meßergebnisse wurden aus Stapel- bzw. Schichtkondensatoren mit 2 µm dicker Polyethylenterephthalatfolie und Rastermaß 5 mm erhalten.

Das Diagramm nach Fig. 7 zeigt die exponentielle Abhängigkeit der Temperatur der Wärmebehandlung von der Zeitdauer der Wärmebehandlung. Auf der Abzisse ist die Zeit in Stunden aufgetragen, während auf der Ordinate die Temperatur in °C angegeben ist. Temperaturen bzw. Zeiten, die im schraffierten Feld liegen, führen zu Kristallisationsgraden über 50 %.

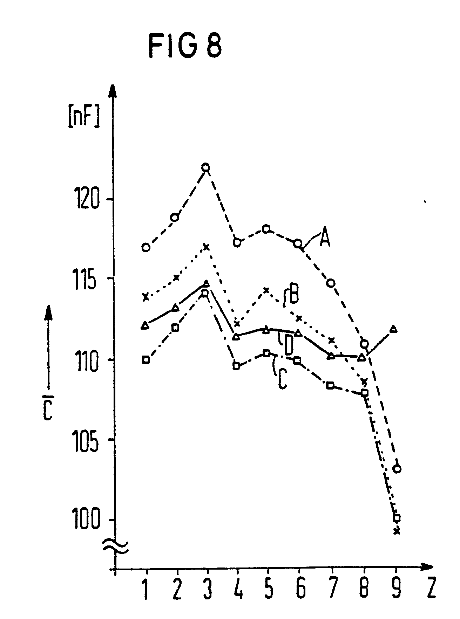

Das in Fig. 8 gezeigte Diagramm stellt die Abhängigkeit der Kapazität von der Lage des Mutterkondensators im Ausgangskondensator bei der Herstellung von Stapel- bzw. Schichtkondensatoren dar.

Die Abzisse zeigt die Reihenfolge der Mutterkondensatoren auf der Trommel in der Zählung von innen nach außen.

Auf der Ordinate ist die Kapazität in nF aufgetragen.

Die Kurve A zeigt die Anfangswerte von Kondensatoren, die bei gleicher Lagenzahl und gleicher Länge abgetrennt wurden und somit praktisch gleiche Volumina haben.

Die Kurve A gibt die Anfangswerte vor der zusätzlichen Behandlung an. Die Kurve B gilt für eine Wärmebehandlung von 6 Stunden Haltezeit bei 180°C. Die Kurve C gilt für eine Wärmebehandlung von 1,5 Stunden bei 224°C. Die Kurve D gilt für eine Wärmebehandlung von 2 Stunden bei 249°C. Kurve D gibt die bevorzugte Ausführungsform der Erfindung wieder.

Die Kurve D zeigt eindeutig, daß unanbhängig von der Lagenzahl des Mutterkondensators Kondensatoren mit einer nur geringfügig streuenden Kapazität erzielt werden.

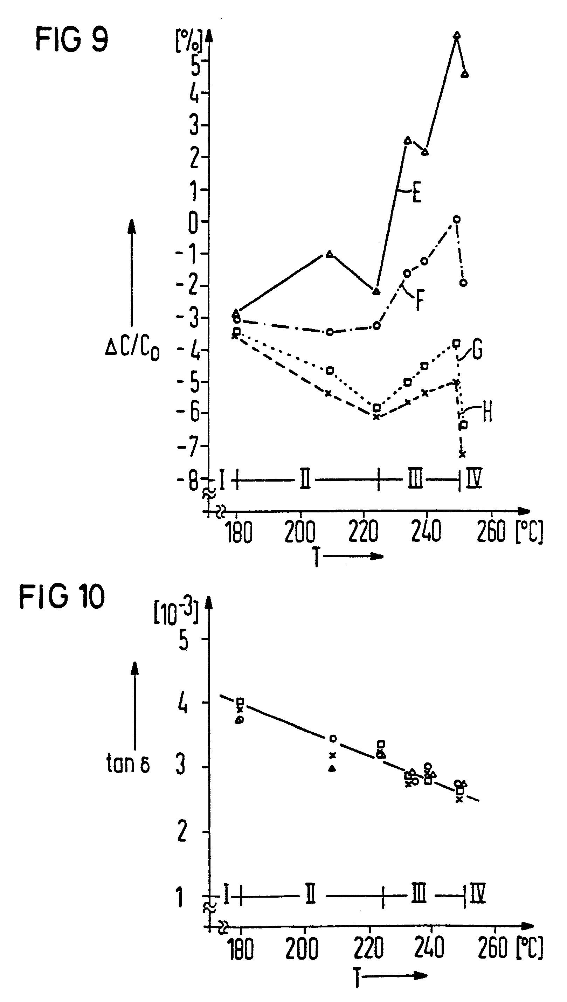

Das Diagramm nach Fig. 9 zeigt die Abhängigkeit der Kapazitätsänderung (Ordinate) durch die erfindungsgemäße zusätzliche Wärmebehandlung. Auf der Abzisse ist die Behandlungstemperatur in °C angegeben.

Die Kurve E gilt für den Mutterkondensator, der an achter Stelle, von innen gerechnet im Ausgangskondensator angeordnet war, die Kurve F gilt für den neunten Mutterkondensator, Kurve G gilt für den siebenten Mutterkondensator und die Kurve H gilt für die Mutterkondensatoren Nr. 3 und 5.

Die ebenfalls in Abszissenrichtung mit römischen Zahlen eingetragenen Bereiche zeigen an, daß im Bereich 1, d.h. bei Temperaturen bis 180°C eine Änderung der Kristallstruktur nicht eintritt. Die Änderung der Kapazität um etwa 3 % in diesem Temperaturbereich I ist auf Trocknung des Dielektrikums während der Wärmebehandlung zurückzuführen.

Im Temperaturenbereich II, d.h. bei Temperaturen von 180 bis 225°C, tritt eine merkliche Verringerung der Kapazität ein, die auf eine Umwandlung der Kristallstruktur mit dem Ergebnis einer Verringerung der Dielektrizitätskonstante zurückzuführen ist.

Im Temperaturbereich III, d.h. bei Temperaturen von 225 bis 250°C nimmt die Kapazität zu, weil durch die erhöhte Schrumpfung Lufteinschlüsse beseitigt werden. Diese Lufteinschlüsse spielen bei besonders dünnen Folien eine besondere Rolle, weil nicht nur die Kapazität verändert wird, sondern weil insbesondere bei dem Lötvorgang beim Einsatz als Chip-Bauelement diese Lufteinschlüsse auch zum Auflatzen des Kondensators beitragen.

Im Temperaturbereich IV, d.h. bei Temperaturen oberhalb 250°C tritt eine sehr starke Kapazitätsverminderung ein, die auf das Schmelzen des dielekrischen Materials zurückzuführen ist.

Das Diagramm nach Fig. 10 zeigt die Verbesserung des Verlustfaktors tan (Ordinate) in Abhängigkeit von der Temperatur der Wärmebehandlung.

Die Kreuze gelten für den von innen gezählt an 5. Stelle im Ausgangskondensator befindlichen Mutterkondensator, die Quadrate, Dreiecke bzw. Ringe gelten für die an 7., 8. bzw. 9. Stelle liegenden Mutterkondensatoren.

Im Temperaturbereich III ist gegenüber den nicht oder nur wenig temperaturbehandelnden Kondensatoren eine Verringerung der Verlustfaktoren von Werten um 4 auf Werte um oder unter 3 erzielt.

**Patentansprüche**

1. Verfahren zur Herstellung eines elektrischen Kondensators, bei dem aus wenigstens einseitig metallisierten Dielektrikumslagen aus teilweise kristallisiertem Polyethylenterephthalat Kondensatorkörper in Form eines Rundwickels erzeugt werden, die danach in an sich bekannter Weise zu einem flachgepreßten Wickel (9) verformt und dabei vorgeschrumpft werden, wonach an den Stirnflächen (12, 13) Metallauflagen (14, 15) zur Kontaktierung der alternierend auf den Dielektrikumslagen angeordneten Belegungen aufgetragen werden, dadurch gekennzeichnet, daß die mit den Metallauflagen (14, 15) versehenen Flachwickel (9) einer zusätzlichen Wärmebehandlung unterworfen werden, bei der die Temperatur von Raumtemperatur auf eine Endtemperatur von 200 bis 250°C in einem Zeitraum von 1 bis 5 Stunden erhöht wird und diese Endtemperatur für eine Zeit von 1 bis 65 Stunden gehalten wird mit der Maßgabe, daß die Länge der Haltezeit zur Endtemperatur umgekehrt proportional ist, so daß ein gewünschter Kristallisationsgrad von wenigstens 50 % erzielt wird.

2. Verfahren zur Herstellung eines elektrischen Kondensators, bei dem wenigstens einseitig metallisierte Bänder aus Polyethylenterephthalat, insbesondere mit randseitigem Wellenschnitt, auf einer Trommel zu einem Ausgangskondensator geschichtet und der Ausgangskondensator senkrecht zu den Schichtebenen in die gewünschten Einzelkondensatoren (7, 8) aufgeteilt wird, wobei gegebenenfalls auf eine Anzahl wenigstens einen Mutterkondensator bildenden Dielektrikumslagen und Belegungen kapazitiv nicht wirksame Zwischenlagen und darauf wieder die kapazitiv wirksamen Dielektrikumslagen mit den Belegungen für den nächsten Mutterkondensator angeordnet werden und der so entstandene Ausgangskondensator mit Stirnkontaktschichten versehen, danach noch auf der Trommel bei ca. 150°C mit dabei erfolgender Verfestigung durch Vorschrumpfung getempert und erst dann im Bereich der Zwischenlagen und in dazu senkrechter Richtung in die gewünschten Einzelkondensatoren (7, 8) aufgeteilt wird, dadurch gekennzeichnet, daß die abgetrennten Einzelkondensatoren (7, 8) einer zusätzlichen Wärmebehandlung unterworfen werden, bei der die Temperatur von Raumtemperatur auf eine Endtemperatur von 200 bis 250°C in einem Zeitraum von 1 bis 5 Stunden erhöht wird und diese Endtemperatur für eine Zeit von 1 bis 65 Stunden gehalten wird mit der Maßgabe, daß die Länge der Haltezeit zur Endtemperatur umgekehrt proportional ist, so daß ein gewünschter Kristallationsgrad von wenigstens 50 % erzielt wird.

3. Verfahren nach Anspruch 1 oder 2, dadurch gekennzeichnet, daß die Wärmebehandlung unter inertem Schutzgas (Stickstoff, Argon, Helium) oder im Vakuum erfolgt.

4. Verfahren nach einem der Ansprüche 1 bis 3, dadurch gekennzeichnet, daß die Haltezeit bei der Wärmebehandlung 2 Stunden und die Endtemperatur 249°C betragen und dadurch ein Kristallisationsgrad von mehr als 50 % erzielt wird.

5. Elektrischer Kondensator, hergestellt nach den Verfahren gemäß einem der Ansprüche 1 bis 4, bestehend aus wenigstens einseitig mit Metallschichten als Belegungen (1, 2) versehenen Dielektrikumslagen (3, 4) aus teilweise kristallisiertem und vorgeschrumpftem Polyethylenterephthalat, bei dem die Belegungen (1, 2) alternierend mit gegenpolig auf Stirnflächen (5, 6, 12, 13, 16, 17) des Kondensatorkörpers (7, 8, 9) aufgebrachten, insbesondere aufgeschoopten Metallauflagen (10, 11, 14, 15, 18, 19) elektrisch leitend verbunden sind und bei dem die Dielektrikumslagen (3, 4) zu einem Stapel (7, 8) geschichtet oder zu einem flachgepreßten Wickel (9) verformt sind, dadurch gekennzeichnet, daß der Kristallisationsgrad der Dielektrikumslagen (3, 4) aus Polyethylenterephthalat wenigstens 50 %, gemessen durch Differenzialthermoanalyse zur Bestimmung der Schmelzpunktsenthalpie, beträgt.

6. Elektrischer Kondensator nach Anspruch 5, dadurch gekennzeichnet, daß der Kristallisationsgrad wenigstens 55 % beträgt.

7. Verwendung eines Kondensators nach Anspruch 5 oder 6 als Chip-Bauelement, das durch Lötung auf Schaltplatten gedruckter Schaltungen befestigbar ist und dabei der Wärme des flüssigen Lotes, das eine Temperatur von maximal 260°C aufweist, für einen Zeitraum von etwa 10 Sekunden ausgesetzt wird.

## Claims

1. A process for the production of an electrical capacitor, wherein, from dielectric layers which consist of partially crystallised polyethylene teraphthalate and which are metallised at least on one side, capacitor bodies are produced in the form of a circular winding, which are then deformed in a known manner to form a flat-pressed winding (9) and are thereby pre-shrunk, whereupon metal coatings (14, 15) are applied to the end faces (12, 13) in order to contact the coatings which are arranged alternately on the dielectric layers, characterised in that the flat windings (9), provided with the metal end coatings (14, 15), are subjected to an additional heat treatment in which the temperature is increased from room temperature to a final temperature of 200 to 250°C during a time period of 1 to 5 hours, and this final temperature is maintained for a period of 1 to 65 hours, the length of the maintenance time being inversely proportional to the final temperature so that a desired degree of crystallisation of at least 50 % is achieved.

2. A process for the production of an electrical capacitor, wherein strips of polyethylene teraphthalate which are metallised at least on one side and which, in particular, are cut with wavy edges are stacked on a drum to form a starting capacitor, and the starting capacitor is divided into the desired individual capacitors (7, 8) at right angles to the plane of the layers, where, if necessary, to a number of dielectric layers and coatings which form at least one parent capacitor, capacitively-inactive intermediate layers are applied, and to these in turn are applied the capacitively-active dielectric layers with the coatings for the next parent capacitor, and wherein the starting capacitor formed in this way is provided with end contact layers, is then annealed on the drum at about 150°C, and is thereby consolidated by prior shrinkage, and only then is divided up into the desired individual capacitors (7, 8) in the region of the intermediate layers and in the direction at right angles thereto, <u>characterised in</u> that the separated individual capacitors (7, 8) are subjected to an additional heat treatment in which the temperature is increased from room temperature to a final temperature of 200 to 250°C during a time period of 1 to 5 hours, and this final temperature is maintained for a period of 1 to 65 hours, the length of the maintenance time being inversely proportional to the final temperature, so that a desired degree of crystallisation of at least 50 % is achieved.

3. A process as claimed in Claim 1 or 2, <u>characterised in</u> that the heat treatment is carried out in an inert shielding gas (nitrogen, argon, helium) atmosphere, or in a vacuum.

4. A process as claimed in one of Claims 1 to 3, <u>characterised in</u> that the maintenance time of the heat treatment is 2 hours and the final temperature is 249°C, whereby a degree of crystallisation of more than 50 % is achieved.

5. An electrical capacitor, produced in accordance with the processes claimed in one of Claims 1 to 4, consisting of dielectric layers (3, 4) which are made of partially crystallised and previously shrunk polyethylene teraphthalate and which are provided at least on one side with metal layers as coatings (1, 2), where the coatings (1, 2) are electrically conductively connected alternately with metal coatings (10, 11, 14, 15, 16, 19) which are applied with opposite polarities to the end faces (5, 6, 12, 13, 16, 17) of the capacitor body (7, 8, 9), in particular by the schoop process, and where the dielectric layers (3, 4) are stacked to form a stack (7, 8) or are shaped to form a flat-pressed winding (9), <u>characterised in</u> that the degree of crystallisation of the dielectric layers (3, 4) which consist of polyethylene teraphthalate is at least 50 %, measured by differential thermo-analysis in order to determine the melting point enthalpy.

6. An electrical capacitor as claimed in Claim 5, <u>characterised in</u> that the degree of crystallisation is at least 55 %.

7. Use of a capacitor as claimed in Claim 5 or 6 as a chip component which can be attached by soldering to circuit boards of printed circuits and is thereby exposed for a period of approximately 10 seconds to the heat of the liquid solder which has a maximum temperature of 260°C.

**Revendications**

1. Procédé de fabrication d'un condensateur électrique, dans lequel sont produits, à partir de couches de diélectrique en polytéréphtalate d'éthylène partiellement cristallisé, métallisées au moins d'un côté, des corps de condensateur sous forme d'une bobine ronde, qui sont ensuite déformés, de manière connue en soi, en un enroulement (9) aplati par compression et de ce fait prérétracté, après quoi des revêtements métalliques (14, 15), destinés à établir le contact avec les armatures ménagées de manière alternée sur les couches de diélectrique, sont appliqués sur les surfaces frontales (12, 13), caractérisé en ce que l'enroulement plat (9) pourvu des revêtements métalliques (14, 15) est soumis à un traitement thermique, dans lequel la température est portée, en un intervalle de temps de 1 à 5 heures, de la température ambiante à une température finale de 200 à 250°C et cette température finale est maintenue pour un temps de 1 à 65 heures avec la caractéristique telle que, la durée du temps de maintien est inversement proportionnelle à la température finale, de manière à obtenir un degré de cristallisation désiré d'au moins 50 %.

2. Procédé de fabrication d'un condensateur électrique, dans lequel des bandes de polytéraphtalate d'éthylène métallisées au moins d'un côté, notamment avec dès découpages ondulés sur les bords, sont empilées sur un tambour, en un condensateur de sortie, et le condensateur de sortie est morcelé, perpendiculairement au plan des couches, en les condensateurs individuels (7, 8) désirés, sur un nombre de couches de diélectrique et d'armatures, formant au moins un condensateur mère, étant éventuellement ménagées des couches intermédiaires non actives sur le plan capacitif et sur celles-ci, étant à nouveau ménagées les couches de diélectrique actives sur le plan capacitif avec les armatures pour les condensateurs mères suivants, et le condensateur de sortie ainsi produit, pourvu de couches de contact frontales, est ensuite, encore sur le tambour, cuit à environ 150°C, une fabrication ayant lieu par pré-rétrécissement, et ledit condensateur de sortie est seulement alors, dans la région des couches intermédiaires et dans la direction perpendiculaire à celles-ci, morcelé en les condensateurs individuels (7, 8) désirés, caractérisé en ce que les condensateurs individuels (7, 8) séparés sont soumis à un traitement thermique supplémentaire dans lequel la température est portée, en un intervalle de temps de 1 à 5 heures, de la température ambiante à une température finale de 200 à 250°C, et cette température finale est maintenue pour un temps de 1 à 65 heures avec la caractéristique telle que, la durée du temps de maintien est inversement proportionnelle à la température finale, de manière à obtenir un degré de cristallisation désiré d'au moins 50 %.

3. Procédé selon la revendication 1 ou 2, caractérisé en ce que le traitement thermique est réalisé en atmosphère inerte (azote, argon, hélium) ou sous vide.

4. Procédé selon l'une des revendications 1 à 3, caractérisé en ce que le temps de maintien, lors du traitement thermique, est de 2 heures et la température finale s'élève à 249°C, et qu'on obtient ainsi un degré de cristallisation de plus de 50 %.

5. Condensateur électrique, fabriqué suivant le procédé selon l'une des revendications 1 à 4, et constitué de couches de diélectrique (3, 4) en polytéréphtalate d'éthylène cristallisé partiellement, et pré-rétréci pourvues, au moins d'un côté, de couches métalliques en tant qu'armatures (1, 2), dans lequel les armatures (1, 2) sont reliées électriquement, de manière alternée, à des revêtements métalliques (10, 11, 14, 15, 18, 19) de polarité opposée, appliqués, notamment par projection, sur des surfaces frontales (5, 6, 12, 13, 16, 17) du corps de condensateur (7, 8, 9), et dans lequel les couches de diélectrique (3, 4) sont disposées en un empilement (7, 8) ou sont déformées en un enroulement aplati par compression (9) , caractérisé en ce que le degré de cristallisation des couches de diélectrique (3, 4) en polytéréphtalate d'éthylène, mesuré par thermoanalyse différentielle pour déterminer l'enthalpie du point de fusion, s'élève au moins à 50 %.

6. Condensateur électrique selon la revendication 5, caractérisé en ce que le degré de cristallisation s'élève au moins à 55 %.

7. Utilisation en tant qu'élément ultramince d'un condensateur selon la revendication 5 ou 6, qui peut être fixé par brasure sur des plaquettes de circuit imprimé, et à cet effet, la chaleur de l'apport de brasure liquide, qui présente une température d'au plus 260°C, est appliquée pendant un intervalle de temps d'environ 10 secondes.

FIG 1

FIG 2

FIG 3

# FIG 4

# FIG 6

# FIG 5

# FIG 7

# FIG 8

FIG 9

FIG 10